(19) Europäisches Patentamt
European Patent Office
Office européen des brevets

(11) **EP 3 663 739 A1**

(12) **EUROPEAN PATENT APPLICATION**

(43) Date of publication:
**10.06.2020 Bulletin 2020/24**

(51) Int Cl.:
***G01M 3/28*** *(2006.01)*     ***G01M 3/00*** *(2006.01)*

(21) Application number: **19184745.8**

(22) Date of filing: **05.07.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.12.2018 KR 20180157027**

(71) Applicant: **Dongmyung Enterprise Co., Ltd Seoul (KR)**

(72) Inventors:
• **KIM, JOO YOUNG**
  **Seoul (KR)**
• **HAN, JANG HI**
  **Seoul (KR)**

(74) Representative: **Conti, Marco**
  **Bugnion S.p.A.**
  **Via di Corticella, 87**
  **40128 Bologna (IT)**

(54) **APPARATUS AND METHOD FOR MONITORING LEAKAGE IN PIPE LINE**

(57) An apparatus for monitoring a leakage of a pipe line includes a plurality of measurement sensor units, installed on a plurality of sections to have predetermined intervals on the pipe line formed to transfer the fuel oil pressured and fed from a fuel oil storage tank, for measuring change amounts of a flow rate, a temperature, a flow amount, and energy of the fuel oil for each of the plurality of sections, and a leakage detector unit for receiving sensing signals corresponding to the change amounts of the flow rate, the temperature, the flow amount, and the energy of the fuel oil from the plurality of measurement sensor units and analyzing the sensing signals to decide whether the pipe line is leaked or not. The leakage detector unit is configured to detect the change amounts for each of the plurality of sections provided on the pipe line, and when a suspected leakage section occurs, compare the change amounts of the suspected leakage section with the change amounts of previous and next sections of the suspected leakage section to decide whether the pipe line is leaked or not by comparing a difference of the change amounts with a predetermined error range.

Figure 1

EP 3 663 739 A1

**Description**

TECHNICAL FIELD

The disclosure relates to an apparatus and method for monitoring a leakage of a pipe line, and more particularly, to the apparatus and method by which the pipe line forming a travelling route of the fuel oil is real-time monitored such that it is decided whether the pipe line is leaked or not according to analysis of such monitoring.

BACKGROUND ART

In general, a pipe line (or delivery pipe) is installed to transfer fuel oil or the like from a structure such as a fuel oil storage tank to a remote or wide area. Such a pipe line may be cracked or pierced due to corrosion caused by long use, vibration generated from other construction or surrounding environment, or rupture of weld zones. In this case, as the fuel oil transferred through the pipe line may be leaked to the outside, a secondary damage, such as pollution of soil or ground water or economic loss due to due to fluctuations in fuel oil supply amount may be occurred. Accordingly, it was initially necessary to detect the leakage of the pipe line.

In this way, techniques for detecting the leakage of the pipe line have been used with tools such as sound bars and the traditional method of using trained human hearing in the pipe line which is small in diameter and not embedded deeply. In recent years, in order to overcome the limitations of the conventional method, a method of detecting the leakage of the fuel oil by detecting sound waves generated when the leakage occurs in the pipe line or by installing a moisture detection sensor inside and outside the pipe line, and a method of inserting a metal wire in a pipe line, detecting a resistance value of the metal wire and detecting leakage according to a variation of the resistance value have been proposed.

However, the existing techniques for detecting the leakage of the pipe line have caused problems. In the case of the conventional method using sound bars, because it depends on human hearing and a certain amount of the leakage have to been detected; it was difficult to detect an accurate leakage part of the pipe line. In addition, in the conventional method using various sensors such as the moisture detection sensor, an area where the leakage is confirmed in each sensor may be narrow, but the length of the pipe line through which the fuel oil is transferred may be relatively long. Therefore, since a considerable number of sensors are required to be mounted on the inside and outside of the pipe line, there is a problem that considerable time and cost are consumed.

In the case of the existing technologies for detecting the leakage of the pipe line, the most techniques are used to measure flow rate using pressure and to detect the leakage through change of the flow rate. However, there was a problem in accuracy in detecting the leakage by using only pressure.

SUMMARY

Embodiments of the disclosure provide an apparatus and method for monitoring a leakage of a pipe line in which a plurality of ultrasonic sensors including a plurality of temperature sensor may be installed in a plurality of sections of along the longitudinal direction of the pipe line. Using these ultrasonic sensors, the flow rate, the temperature, the flow amount, and energy of the fuel oil for each section may be simultaneously detected and monitored in real time to decide whether or not the pipe line is leaked. If the change amounts of the flow rate, the temperature, the flow amount, and energy of the fuel oil do not all agree with one another, they may be compared and analyzed with the change amounts of neighboring sections to decide whether a relevant section is leaked or not. Thus, the accuracy of the leakage decision of the pipe line may be improved.

According to one aspect of the disclosure, there is provide an apparatus for monitoring a leakage of a pipe line, which includes: a plurality of measurement sensor units, the plurality of measurement sensor units being installed on a plurality of sections to have predetermined intervals on the pipe line formed to transfer fuel oil pressured and fed from a fuel oil storage tank, for measuring change amounts of a flow rate, a temperature, a flow amount, and energy of the fuel oil for each of the a plurality of sections; and a leakage detector unit for receiving sensing signals corresponding to the change amounts of the flow rate, the temperature, the flow amount, and the energy of the fuel oil from the plurality of measurement sensor units and analyzing the sensing signals to decide whether the pipe line is leaked or not, wherein the leakage detector unit is configured to: detect the change amounts for each of the plurality of sections provided on the pipe line; and when a suspected leakage section occurs, compare the change amounts of the suspected leakage section with the change amounts of previous and next sections of the suspected leakage section to decide whether the pipe line is leaked or not by comparing a difference of the change amounts with a predetermined error range.

Herein, the measurement sensor unit may include an ultrasonic sensor for measuring the flow rate of the fuel oil passing through the pipe line, and a temperature sensor for measuring the temperature of the fuel oil.

The leakage detector unit may include a sensing signal storage unit for storing a plurality of sensing signal information corresponding to a steady state and a leakage state with respect to the flow rate, the temperature, the flow amount, and the energy of the fuel oil passing through the pipe line, and the sensing signal storage unit compares the sensing signals transmitted from the plurality of measurement sensor units with the plurality of sensing signal information to decide whether the pipe line is leaked or not.

Further, the leakage detector unit may include a communication module for performing wired/wireless communication with a wired terminal or a wireless terminal which is remotely located and transmitting an alarm message to a designated wired terminal or wireless terminal when leakage of the pipe line occurs as a result of the analyzing.

Meanwhile, according to another aspect of the disclosure, there is provided a method for monitoring leakage of a pipe line, which includes: measuring in real time change amounts of a flow rate, a temperature, a flow amount, and energy of fuel oil passing through the pipe line in each of a plurality of sections using the plurality of measurement sensor units, analyzing the change amounts of the flow rate, the temperature, the flow amount, and the energy of the fuel oil during a first predetermined analysis period through the leak detector unit and comparing the analyzed change amounts of the flow rate, the temperature and the flow amount of the fuel oil with a plurality of predetermined reference values, respectively, and deciding that leakage of the pipe line has occurred if it is determined that the change amounts are all changed by comparing the change amounts with the reference values.

In this case, the deciding may decide whether the change amounts for all of the flow rate, the temperature, the flow amount, and the energy of the fuel oil are changed or not by comparing the plurality of reference values stored in the sensing signal storage unit with the change amounts measured through the leakage detector unit.

Further, according to the present disclosure, the method for monitoring leakage of the pipe line may further include transmitting an alarm message to the wired terminal or the wireless terminal through the communication module when deciding that the pipe line is leaked.

In addition, the comparing may include analyzing a change trend of the flow rate, the temperature, the flow amount, and the energy of the fuel oil during a second predetermined analysis period to decide the leakage of the pipe line when it is decided that at least one of the amounts of the change of the flow rate, the temperature, the flow amount, and the energy of the fuel oil is changed through the leakage detector unit.

Further, the analyzing the change trend may include comparing values of the change amounts for the plurality of measurement sensor units installed in each neighboring previous and next section sections on a relevant section by analyzing the change trend, and comparing the difference of the comparison with the predetermined error range to decide leakage of the relevant section.

Herein, the second predetermined analysis period may be set to a period long longer than the first predetermined analysis period

BRIEF DESCRIPTION OF THE DRAWINGS

The above and other objects, features and other advantages of the present disclosure will be more clearly understood from the following detailed description taken in conjunction with the accompanying drawings, in which:

FIG. 1 is a schematic view showing a configuration of apparatus for monitoring a leakage of a pipe line according to an embodiment of the disclosure;

FIG. 2 is a diagram illustrating a measurement principle of a measurement sensor unit for an apparatus for monitoring a leakage of a pipe line according to an embodiment of the disclosure;

FIG. 3 is a view sequentially showing a method of monitoring a leakage of a pipe line according to another embodiment of the disclosure; and

FIG. 4 is a flowchart for explaining a leakage decision in a method of monitoring a leakage of a pipe line according to another embodiment of the disclosure.

DETAILED DESCRIPTION

Hereinafter, the preferred embodiments according to the disclosure will be described in detail with reference to the accompanying drawings.

The advantages and features of the disclosure will become apparent with reference to the embodiments described in detail below with reference to the accompanying drawings.

It should be understood, however, that the disclosure is not intended to be limited by the embodiments set forth herein, but is to be embodied in many different forms. Accordingly, the embodiments set forth herein are to provide the full knowledge of the scope of the invention to those of ordinary skill in the art, and the disclosure is only defined by the scope of the claim.

In addition, the detailed description will not be provided in the explanations of the disclosure if it is deemed that the related technologies will obscure the gist of the disclosure.

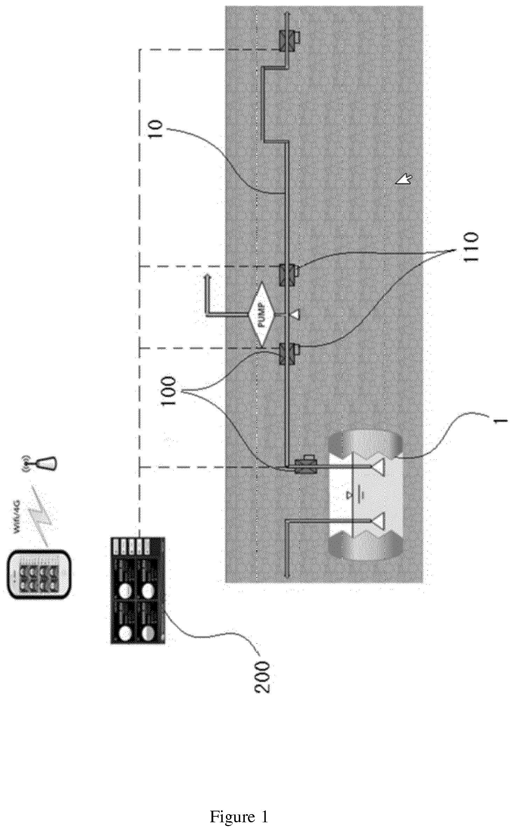

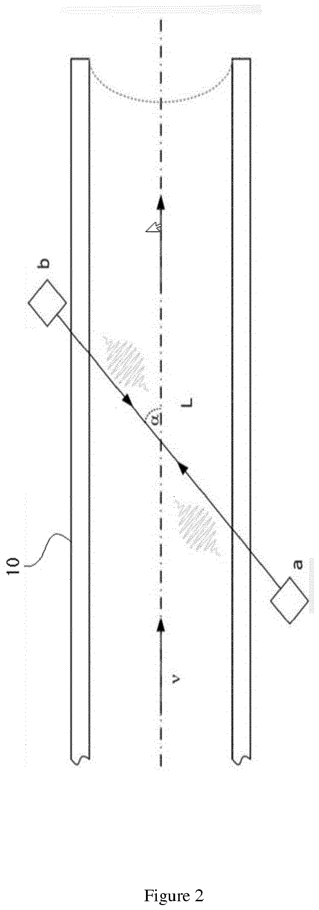

FIG. 1 is a schematic view showing a configuration of apparatus for monitoring a leakage of a pipe line according to an embodiment of the disclosure, and FIG. 2 is a diagram illustrating a measurement principle of a measurement sensor unit for an apparatus for monitoring a leakage of a pipe line according to an embodiment of the disclosure, and

As shown in FIG. 1, an apparatus for monitoring leakage of a pipe line includes a plurality of measurement sensor units 100 and a leakage detector unit 200.

The plurality of measurement sensor units 100 may be installed in a plurality of sections to have predetermined intervals on the pipe line 10 formed to transfer fuel oil pressured and fed from a fuel oil storage tank 1.

As the plurality of measurement sensor units 100 may be installed in the plurality of sections to have predetermined intervals along the longitudinal direction of the pipe line 10, change amounts of a flow rate, a temperature, a flow amount, and energy of the fuel oil in each section corresponding to an installed location may be measured.

The measurement sensor unit 100 may be preferably an ultrasonic sensor.

That is, in general, an ultrasonic sensor, more specifically, an ultrasonic flow meter, may be configured to measure the flow rate using ultrasonic propagation time and multiply the measured flow rate by a cross-sectional area of the pipe line 10 measured in advance to measure a volume flow amount.

In other words, as shown in FIG. 2, a general ultrasonic flow meter is may be installed such that a pair of ultrasonic transducers a and b are separated from each other to allow the transducers to be alternately transmitted or received. Accordingly, the flow rate may be calculated by the following relational Expression 1.

[Expression 1]

$$V = \Delta t \cdot C^2 / 2 \cdot L \cdot \cos\varphi = (L^2/2d) \cdot [(t_{21} - t_{12})/(t_{12} \cdot t_{21})]$$

Herein, $\Delta t$ is the time difference in which the ultrasonic waves propagate in a fluid in a direction opposite to the flow rate direction at a constant angle $\alpha$ with respect to the flow rate direction, L is the interval between two ultrasonic transducers, and C is a sound velocity in the fluid.

The flow rate measurement method using the ultrasonic wave propagation time difference is generally well known as a method in which a given constant $L^2/2d$ is inputted in advance, and a difference between the propagation time $t_{12}$ measured when the ultrasonic pulse is emitted in the flow rate direction and the propagation time $t_{21}$ measured when the ultrasonic pulse is emitted in a direction opposite to the flow rate direction is calculated.

Meanwhile, if the flow rate of the fuel oil measured through the measurement sensor unit 100 is multiplied by the cross-sectional area of the pipe line 10 measured in advance, the volume flow amount may be measured. However, the measurement of only the flow rate and the volume flow amount of such fuel oil may cause errors. Accordingly, the measurement sensor units 100 according to the present embodiment include a temperature sensor 110 for temperature measurement, so that a mass flow amount may also be measured using the measured information as well as the flow rate and volume flow amount of the fuel oil passing through the pipe line 10. Therefore, it is possible to reduce the errors when leakage of the pipe line 10 is decided.

In general, an ultrasonic flow meter is a linear calibration flow meter that measures a flow rate using an ultrasonic sensor, that is, it converts the frequency detected from the transducer to velocity, and multiplies the converted velocity by the cross-sectional area to indicate the volume flow amount. Thus, since the ultrasonic flow meter has a function of measuring only the volume of the fluid, an error occurs when the density changes depending on a temperature and a pressure.

Accordingly, when the ultrasonic flow meter is simply used, only the volume flow amount may be measured, whereby the measurement reliability is somewhat reduced. Therefore, in this embodiment, since the change amounts of the temperature as well as the flow rate and the volume flow amount of the fuel oil may also be measured; the mass flow amount may also be used as a parameter for deciding the leakage. Therefore, according to the embodiment of the present disclosure, the accuracy of the leakage decision of the pipe line 10 may be improved.

In addition, in this embodiment, it is possible to measure not only the flow rate, the volume flow rate, the mass flow rate, and the temperature of the fluid oil, but also the change amount of the energy of the flow oil for each section using them to reduce the error in determining the leakage of the pipe line 10. The change amount of this energy is calculated by the following Expression 2, i.e., a relational expression for a general flow fluid energy.

[Relation 2]

$$E = Q * (T_{OUT} - T_{IN}) * C$$

Where Q is the mass flow rate, $T_{OUT} - T_{IN}$ is the temperature difference within the section, and C is the heat

capacity (KWh/m$^3$ °C).

Meanwhile, the leakage detector unit 200 may receive sensing signals corresponding to the change amounts of a flow rate, a temperature, a mass flow amount, a volume flow amount (the mass and volume flow amounts are hereinafter referred to as "flow amount"), energy of the fuel oil from the plurality of measurement sensor units 100, analysis the received sensing signals to decide whether the pipe line 10 is leaked or not.

That is, the leakage detector unit 200 may be configured to receive the sensing signals in real time from the measurement sensor units 100 and perform the analysis. In this case, the analysis of the sensing signals may be performed during a first predetermined analysis period, for example, during one hour to decide whether the pipe line 10 is leaked or not.

In other words, the leakage detector unit 200 may receive and analyze the sensing signals in real time from the measurement sensor units 100. As a result, if the flow rate, the temperature, the flow amount, and the energy of the fuel oil in the relevant section where the measurement sensor units 100 are installed are all lowered, that is, if it is decided that they are all changed, the leakage detector unit 200 may be configured to decide that the leakage of the pipe line 10 has occurred and to transmit an alarm message accordingly.

To this end, although not shown in the drawings, the leakage detector unit 200 may be provided with a sensing signal storage unit. Since the plurality of sensing signal information corresponding to a steady state and a leakage state on the flow rate, the temperature, the flow amount, and the energy of the fuel oil passing through the pipe line 10 are built by a database in the sensing signal storage unit, the sensing signals transmitted from the measurement sensor units 100 may be compared with the plurality of sensing signal information and it may be decided whether or not the flow rate, the temperature, the flow amount, and the energy of the fuel oil in the relevant section in which the measurement sensor unit 100 is installed may be all changed.

In addition, if at least one of the conditions of the flow rate, the temperature, the flow amount, and the energy of the fuel oil in the relevant section in which the measurement sensor unit 100 are installed may be changed, the leakage detector unit 200 may analyze trend over a second predetermined analysis period, for example, during a week, and at the same time compare and analyze the sensing signals for the neighboring previous and next sections on the relevant section. As a result of this analysis, if the error rate falls outside the predetermined error range, it is determined that the leakage of the pipe line 10 has occurred.

More specifically, in a state in which the condition of at least one of the flow rate, the temperature, the flow amount, and the energy of the fuel oil in the relevant section in which the measurement sensor unit 100 is installed may be determined to have changed, the leakage detector unit 200 may compare and analyze the sensing signals for the neighboring sections, that is, for the previous and next sections of the relevant section. And, as a result of the analysis, if the error range for the difference is more than 1%, the leakage detector unit 200 decides that leakage of the pipe line 10 has occurred and then allows an alarm message corresponding thereto to be transmitted.

Herein, the leakage detector unit 200 may perform wired/wireless communication with a wired terminal or a wireless terminal which is remotely located. Accordingly, the leakage detector unit 200 may include a communication module (not shown) for transmitting the alarm message to a designated wired terminal or wireless terminal when the leakage of the pipe line 10 occurs as a result of analysis.

Thus, the leakage detector unit 200 may allow a control room or manager to easily identify a section where the leakage occurred among the plurality of sections in which the measurement sensor unit 100 is installed through the communication module (not shown).

As a result, the apparatus for monitoring leakage of a pipe line according to the present embodiment may include the plurality of measurement sensor units 100 including the plurality of temperature sensor 110 in the plurality of sections of the pipe line 10.

Using this measurement sensor unit 100, the flow rate, the temperature, the flow amount, and the energy of the fuel oil for each section are simultaneously detected and monitored in real time to decide whether or not the pipe line is leaked. If the change amounts of the flow rate, the temperature, the flow amount, and the energy of the fuel oil do not all agree with each other, they are compared and analyzed with the change amounts of neighboring sections to decide whether the relevant section is leaked or not. Thus, the leakage decision of the pipe line 10 may be improved.

Accordingly, the apparatus for monitoring the leakage of the pipe line according to the present embodiment may initially monitor the leakage of the pipe line 10 to prevent contamination of the soil and ground water due to leakage of the fuel oil and prevent the secondary damage such as economic loss due to due to fluctuations in fuel oil supply amount at the same time.

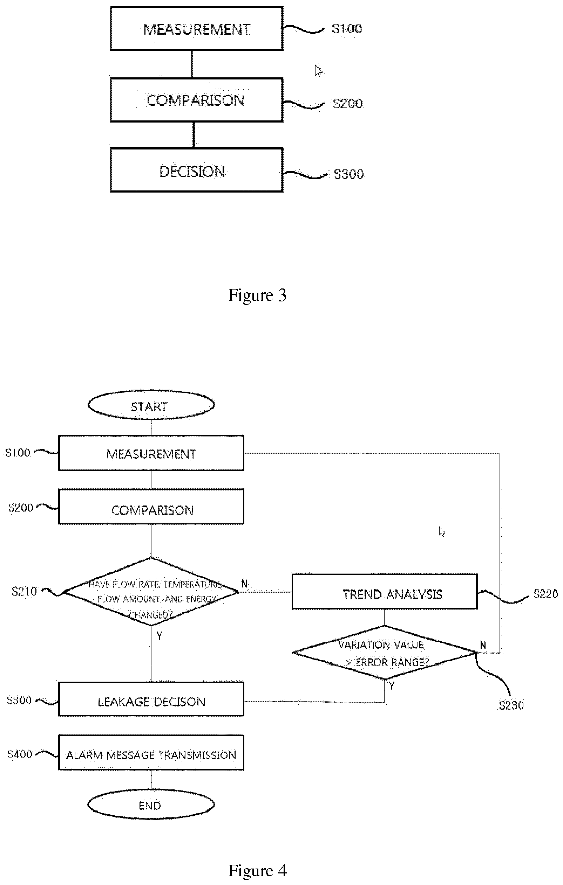

Referring to FIGS. 3 and 4, FIG. 3 is a view sequentially showing a method of monitoring a leakage of a pipe line according to another embodiment of the disclosure, and FIG. 4 is a flowchart for explaining a leakage decision in a method of monitoring a leakage of a pipe line according to another embodiment of the disclosure.

As shown in FIG. 3, a method for monitoring leakage of a pipe line according to the present embodiment will be sequentially described below.

First, the change amounts of a flow rate, a temperature, a flow amount, and energy of fuel oil passing through a pipe line 10 may be measured in real time for each of sections using a plurality measurement sensor units 100 (S100).

Then, the change amounts of the flow rate, the temperature, the flow amount, and the energy of the fuel oil may be analyzed during the first predetermined analysis period through a leakage detector unit 200, and values of the change amounts of the flow rate, the temperature, the flow amount, and the energy of the fuel oil may be each compared with a predetermined reference value (S200).

That is, the values of the amount values of change of the flow rate, the temperature, the flow amount, and the energy of the fuel oil measured and delivered in real time in the measurement sensor units 100 may be collected in the leakage detector unit 200 over the first analysis period, for example, for one hour, and the values of the change amounts may be compared with a predetermined reference value to confirm the values are all lower or higher, that is, whether or not they are all changed.

This reference value may be predetermined as an average value for deciding a leakage state. More specifically, a plurality of sensing signal information corresponding to the steady state and the leakage state for the flow rate, the temperature, the flow amount, and the energy of the fuel oil passing through the pipe line 10 may be stored in the sensing signal storage unit built by a database in the sensing signal storage unit. Accordingly, the sensing signals transmitted from the measurement sensor units 100 may be compared with the plurality of sensing signal information and it may be decided whether or not the flow rate, the temperature, the flow amount, and the energy of the fuel oil in the relevant section in which the measurement sensor unit 100 is installed have been all changed.

Then, if the values of the change amount are compared with the reference values and thus it is decided that the values of the change amount, that is, the change amounts corresponding to the flow rate, the temperature, the flow amount, and the energy in each of the sections are all changed to be equal to or higher than the reference values (S210), it is decided that the leakage has occurred in the pipe line 10 (S300).

Herein, when having decided the leakage of the pipe line 10, an alarm message may be transmitted to the wired terminal or the wireless terminal through a communication module (not shown) (S400), such that the control room or the manager may easily grasp the section where the leakage occurred among the plurality of sections in which the measurement sensor unit 100 is installed.

Meanwhile, as shown in FIG. 4, if the values of the change amount are compared with the reference values and thus it is decided that one or more values of the values of the change amount, that is, the change amounts corresponding to the flow rate, the temperature, the flow amount, and the energy are changed (S210), the leakage of the pipe line 10 may be decided by analyzing change trend during a second predetermined analysis period without immediately deciding that the leakage has occurred in the pipe line 10 (S220).

In this case, the second predetermined analysis period may be set to be one week, as an example, longer than the first predetermined analysis period described above, so that the change trend of the values of the change amount of the flow rate, the temperature, the flow amount, and the energy may be more effectively analyzed.

In this way, the values calculated by analyzing the change trend during the second change analysis period may be compared with the values of the change amounts for the leakage detector unit 200 installed in each neighboring previous and next section sections of the relevant section to decide that the relevant section is leaked (S230).

In other words, the change trend may be analyzed during the second predetermined analysis period, and the values of the change amounts may be compared with the values of the change amounts for the measurement sensor units 100 installed in the neighboring previous and next sections of the relevant section. More specifically, the values of the change amount in the relevant section analyzed by the change trend may be relatively compared with the values of the change amounts in the previous and next sections. As a result of these comparisons, if it is decided that the error range for at least one of the flow rate, the temperature, the flow amount, and the energy is out of a predetermined range, for example, 1% error range, it is decided that the leakage in the relevant section has occurred, and a precise analysis of the relevant section may be made using a confirmation with the naked eye and a confirmation through a measuring instrument.

In this case, if the result values and the values of the change amount are decided to be within the predetermined error range, since it is decided that the result values are simply changed by other environmental factors such as the temperature change of the ground due to a seasonal factor, it may be decided that no leakage has occurred in the relevant section.

Therefore, the method of monitoring the leakage of the pipe line according to the present embodiment may improve the accuracy of the leakage decision of the pipe line 10. As a result, the leakage of the pipe line 10 may be initially monitored, such that contamination of soil and ground water may be prevented, and the secondary damage such as economic loss due to fluctuations in fuel oil supply amount may be prevented.

In the present disclosure, a plurality of ultrasonic sensors including a plurality of temperature sensor may be installed in a plurality of sections of along the longitudinal direction of the pipe line. Using these ultrasonic sensors, the flow rate, the temperature, the flow amount, and the energy of the fuel oil for each section may be simultaneously detected and monitored in real time to decide whether or not the pipe line is leaked. At the same time, if the change amounts of the flow rate, the temperature, the flow amount, and the energy of the fuel oil do not all agree with each other, they may be compared and analyzed with the change amounts of neighboring sections to decide whether the relevant section is leaked or not. Thus, it is possible to improve the accuracy of the leakage decision of the pipe line.

Accordingly, in the disclosure, the leakage of the pipe line may be initially monitored, such that soil and ground water pollutions caused by the leakage of the fuel oil may be prevented, and at the same time the secondary damage such as economic loss due to fluctuations in fuel oil supply amount.

While the above-described disclosure has been described with reference to the embodiment (s) shown in the drawings, it will be to be understood that various changes and modifications may be made without departing from the scope of the present invention. In addition, it will be appreciated that all or some of the elements (s) may be optionally constructed in combination. Accordingly, the true technical scope to be protected by the disclosure should be determined by the technical idea of the appended claims.

**Claims**

1. An apparatus for monitoring a leakage of a pipe line.
   a plurality of measurement sensor units, the plurality of measurement sensor units being installed on a plurality of sections to have predetermined intervals on the pipe line formed to transfer fuel oil pressured and fed from a fuel oil storage tank, for measuring change amounts of a flow rate, a temperature, a flow amount, and energy of the fuel oil for each of the a plurality of sections; and
   a leakage detector unit for receiving sensing signals corresponding to the change amounts of the flow rate, the temperature, the flow amount, and the energy of the fuel oil from the plurality of measurement sensor units and analyzing the sensing signals to decide whether the pipe line is leaked or not,
   wherein the leakage detector unit is configured to: detect the change amounts for each of the plurality of sections provided on the pipe line; and when a suspected leakage section occurs, compare the change amounts of the suspected leakage section with the change amounts of previous and next sections of the suspected leakage section to decide whether the pipe line is leaked or not by comparing a difference of the change amounts with a predetermined error range.

2. The apparatus according to claim 1, wherein the measurement sensor unit includes an ultrasonic sensor for measuring the flow rate of the fuel oil passing through the pipe line, and a temperature sensor for measuring a temperature of the fuel oil.

3. The apparatus according to claim 1, wherein the leakage detector unit includes a sensing signal storage unit for storing a plurality of sensing signal information corresponding to a steady state and a leakage state with respect to the flow rate, the temperature, the flow amount, and the energy of the fuel oil passing through the pipe line, and the sensing signal storage unit compares the sensing signals transmitted from the plurality of measurement sensor units with the plurality of sensing signal information to decide whether the pipe line is leaked or not.

4. The apparatus according to claim 1, wherein the leakage detector unit includes a communication module for performing wired/wireless communication with a wired terminal or a wireless terminal which is remotely located and transmitting an alarm message to a designated wired terminal or wireless terminal when leakage of the pipe line occurs as a result of the analyzing.

5. A method for monitoring leakage of a pipe line using an apparatus for monitoring leakage of the pipe line according to any one of claims 1 to 4,
   measuring in real time the change amounts of a flow rate, a temperature, a flow amount, and energy of fuel oil passing through the pipe line for each of the plurality of sections using the plurality of measurement sensor units;
   analyzing the change amounts of the flow rate, the temperature, the flow amount, , and the energy of the fuel oil during a first predetermined analysis period through the leak detector unit and comparing the analyzed change amounts of the flow rate, the temperature, the flow amount, and the energy of the fuel oil with a plurality of predetermined reference values, respectively; and
   deciding that the leakage of the pipe line has occurred if it is determined that the values of the change amounts are all changed by comparing the change amounts with the reference values.

6. The method according to claim 5, wherein the deciding includes deciding whether the change amounts for all of the flow rate, the temperature, the flow amount, and the energy of the fuel oil are changed or not by comparing the plurality of reference values stored in the sensing signal storage unit with the values of the change amounts measured through the leakage detector unit.

7. The method according to claim 5, further comprising transmitting an alarm message to the wired terminal or the wireless terminal through the communication module when deciding that the pipe line is leaked.

8. The method according to claim 5, wherein the comparing includes analyzing a change trend of the flow rate, the temperature, the flow amount, and the energy of the fuel oil during a second predetermined analysis period to decide the leakage of the pipe line when it is decided that at least one of the change amounts of the flow rate, the temperature, the flow amount, and the energy of the fuel oil is changed through the leakage detector unit

9. The method according to claim 8, wherein the analyzing the change trend includes comparing the values of the change amounts for the plurality of measurement sensor units installed in each of neighboring previous and next section sections of a relevant section by analyzing the change trend, and comparing the difference of the comparison with the predetermined error range to decide leakage in the relevant section.

10. The method according to claim 8, wherein the second predetermined analysis period is set to a period long longer than the first predetermined analysis period.

Figure 1

Figure 2

MEASUREMENT — S100

COMPARISON — S200

DECISION — S300

Figure 3

START

S100 — MEASUREMENT

S200 — COMPARISON

S210 — HAVE FLOW RATE, TEMPERATURE, FLOW AMOUNT, AND ENERGY CHANGED? — N — TREND ANALYSIS — S220

Y

VARIATION VALUE > ERROR RANGE? — N

S300 — LEAKAGE DECISON

Y — S230

S400 — ALARM MESSAGE TRANSMISSION

END

Figure 4

Europäisches
Patentamt

European
Patent Office

Office européen
des brevets

# EUROPEAN SEARCH REPORT

Application Number

EP 19 18 4745

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2012/150455 A1 (FRANKLIN CHARLES M [US] ET AL) 14 June 2012 (2012-06-14) * paragraph [0027] - paragraphs [0032], [0044]; figure 4 * | 1-10 | INV. G01M3/28 G01M3/00 |
| A | KR 101 555 461 B1 (IS TECHNOLOGIES CO LTD [KR]; UNIV INCHEON IND ACAD COOP [KR]) 23 September 2015 (2015-09-23) * paragraph [0104] - paragraph [0143]; figures * | 1-10 | |
| A | US 5 272 646 A (FARMER EDWARD J [US]) 21 December 1993 (1993-12-21) * column 3, line 37 - column 6, line 37 * | 1-10 | |

TECHNICAL FIELDS
SEARCHED    (IPC)

G01M

The present search report has been drawn up for all claims

| Place of search | Date of completion of the search | Examiner |
|---|---|---|
| The Hague | 8 January 2020 | Amroun, Sébastien |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 18 4745

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2020

| Patent document cited in search report | | Publication date | Patent family member(s) | Publication date |
|---|---|---|---|---|
| US 2012150455 | A1 | 14-06-2012 | NONE | |
| KR 101555461 | B1 | 23-09-2015 | NONE | |
| US 5272646 | A | 21-12-1993 | NONE | |

EPO FORM P0459

For more details about this annex : see Official Journal of the European Patent Office, No. 12/82